# EUROPEAN PATENT APPLICATION

(11) **EP 2 009 451 A2**
(43) Date of publication of application: **31.12.2008**
(21) Application number: 08158897.2
(22) Date of filing: 24.06.2008
(51) Int. Cl.: G01P 3/48

(54) **Synchronous signal generator for trim balancing of jet engine**

(30) Priority: 27.06.2007 US 769515
(71) Applicant: Honeywell International Inc., Morristown NJ 07960 (US)
(72) Inventor: Shilo, Mark A. Honeywell International Inc. Patent Services M/S-AB/2B, Morristown, NJ 07962-2245 (US); Talbert, Paul B., Phoenix, AZ 85021 (US); Alam, Mohsiul, Chandler, AZ 85224 (US)
(74) Representative: Buckley, Guy Julian

(57) **Abstract**

A synchronous signal generator (80) is provided for use in conjvmction with an aircraft engine (20) having a spool (46) and an engine output shaft (66) driven by the spool (46). The synchronous signal generator includes a generator housing (82), a generator output member (86) rotatably mounted in the generator housing, a once-per-revolution timing mark (98) on the generator output member, and conversion gearing (84) disposed within the generator housing and configured to couple the engine output shaft to the generator output member. The conversion gearing rotates the generator output member at substantially the same rotational frequency as the spool when the conversion gearing is coupled to the engine output shaft.

## Description

### FIELD OF THE INVENTION

The present invention relates generally to jet engines, and, more particularly, to a synchronous signal generator for use in the trim balancing of a multi-spool aircraft engine.

### BACKGROUND OF THE INVENTION

A multi-spool jet engine (e.g., a turbofan engine) typically includes a high pressure (HP) spool, which supports a high pressure compressor and a high pressure turbine. The high pressure compressor and the high pressure turbine may each include one or more bladed discs that extend radially outward from the HP shaft. As the HP shaft rotates, so too do the bladed discs. If the discs are not properly balanced (i.e., if the mass of the discs is not evenly distributed about the longitudinal axis of the HP shaft), vibrations may be produced as the HP shaft rotates.

To decrease or eliminate vibrations, the bladed discs forming the high pressure turbine and those forming the high pressure compressor may be balanced individually or simultaneously. In general, trim balancing involves the addition of weight to (e.g., the attachment of a counterweight) or the removal of weight from (e.g., grinding) the HP spool, the high pressure turbine, and/or the high pressure compressor. Typically, multiple trial runs are performed. During each trial run, a test weight is added to the HP shaft at a chosen location and the resulting change in the magnitude of vibration is recorded. These changes in vibrations are then correlated to the rotational frequency of the HP spool during each trial run, and the location at which weight should be added or removed is eventually determined.

When the jet engine is assembled, the HP shaft is contained within the engine's nacelle; it is thus difficult to directly measure the rotational frequency and position of the HP shaft during the trim balancing trial runs. Electronic signal generators have been developed that may derive the rotational frequency of the HP shaft by monitoring the rotation of a gear or other rotational body mechanically coupled to the HP shaft. Such a signal generator may include a controller having a sensor (e.g., a monopole or a proximity sensor), which is coupled to the controller and positioned adjacent the gear. As the gear rotates, each tooth of the gear passes by the sensor, which produces a corresponding timing pulse. The controller utilizes the signal provided by the sensor to derive the rotational frequency of the HP shaft during the trial run, which may then be utilized to trim balance the jet engine in the manner described above.

In conventional signal generators of the type described above, the sensor produces multiple timing pulses for each revolution of the HP shaft. The controller cannot determine which of these pulses represents a full revolution of the HP shaft through multiple trial runs. As a result, the timing pulse may become unsynchronized with the HP spool between engine starts during the trim balancing process. Due to this asynchronization, it may be difficult to determine the proper location at which weight should be added or removed without the performance of a significant number of trial runs; e.g., utilizing conventional trim balancing techniques and equipment, eight trial runs are typically necessary for two plan trim balancing. During each trial run, the engine is shut-down, dissembled, reassembled, and then re-activated. The performance of multiple trial runs is thus time consuming and costly. In addition, each trial run results in additional wear to the jet engine consequently decreasing the engine's life and overall value.

Considering the foregoing, it should be appreciated that it is desirable to provide a synchronous signal generator that produces a signal indicative of the rotational frequency of an aircraft spool (e.g., the high pressure spool) and that remains synchronized with the spool throughout the trim balancing process. Other desirable features and characteristics of the present invention will become apparent from the subsequent detailed description of the invention and the appended claims, taken in conjunction with the accompanying drawings and this background of the invention.

### BRIEF SUMMARY OF THE INVENTION

A synchronous signal generator is provided for use in conjunction with an aircraft engine having a spool and an engine output shaft driven by the spool. The synchronous signal generator includes a generator housing, a generator output member rotatably mounted in the generator housing, a once-per-revolution timing mark on the generator output member, and conversion gearing disposed within the housing and configured to couple the engine output shaft to the generator output member. The conversion gearing rotates the generator output member at substantially the same rotational frequency as the spool when the conversion gearing is coupled to the engine output shaft.

### BRIEF DESCRIPTION OF THE DRAWINGS

The present invention will hereinafter be described in conjunction with the following drawing figures, wherein like numerals denote like elements, and:

FIGs. 1 and 2 are cross-sectional and isometric views, respectively, of a conventional multi-spool jet engine including an accessory gearbox;

FIGs. 3 and 4 are side cross-sectional and rear cross-sectionals, respectively, of a simplified synchronous signal generator in accordance with a first exemplary embodiment of the present invention; and

FIG. 5 is a functional schematic of the exemplary synchronous signal generator shown in FIGs. 3 and 4 coupled to the multi-spool jet engine shown in FIGs. 1 and 2.

### DETAILED DESCRIPTION OF AT LEAST ONE EXEMPLARY EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention. In this regard, although a three spool turbofan gas turbine engine is described for illustrative purposes below, it will be appreciated that the invention may be utilized with other types of multi-spool aircraft engine.

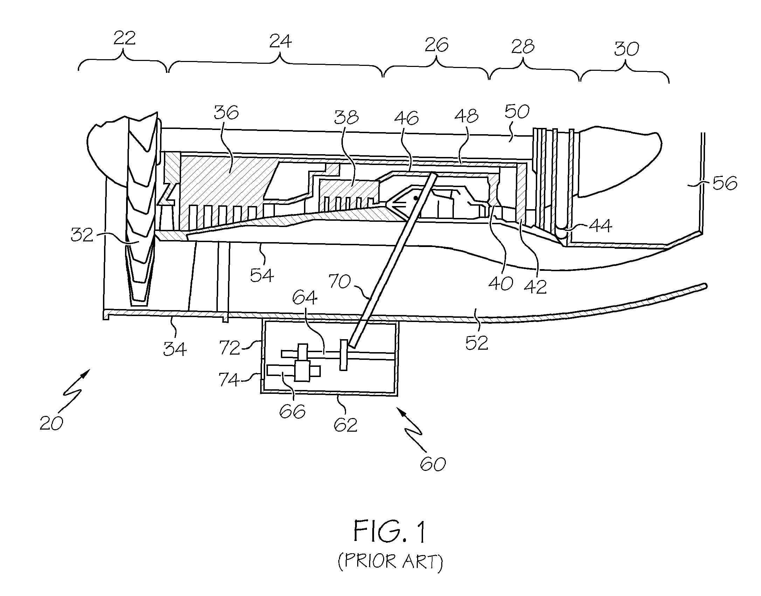

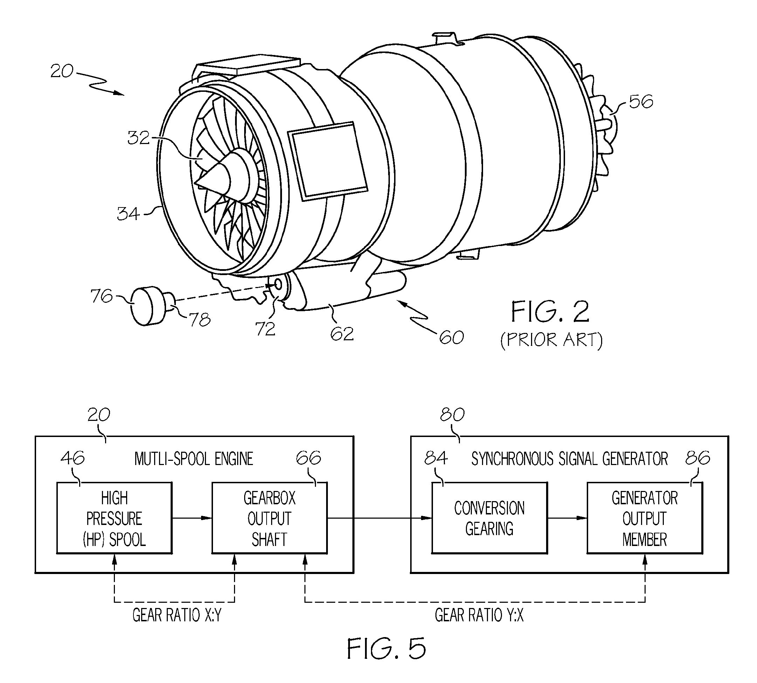

FIGs. 1 and 2 are cross-section and isometric views of a multi-spool jet engine **20** of the type conventionally deployed on an aircraft. In this particular example, multi-spool jet engine **20** is a three spool turbofan gas turbine engine. As shown in FIG. 1, jet engine **20** may have an intake section **22,** a compressor section **24,** a combustion section **26,** a turbine section **28,** and an exhaust section **30.** Intake section **22** includes a fan **32,** which is mounted in a fan case **34.** Compressor section **24** includes one or more compressors (e.g., an intermediate pressure (IP) compressor **36** and a high pressure (HP) compressor **38),** and turbine section **28** includes one or more turbines (e.g., an HP turbine **40,** an IP turbine **42,** and a low pressure (LP) turbine **44),** which may be disposed in axial flow series. HP compressor **38** and HP turbine **40** are mounted on opposite ends of an HP shaft or spool **46;** IP compressor **36** and IP turbine **42** are mounted on opposite ends of IP spool **48;** and fan **32** and LP turbine **44** are mounted on opposite ends of a LP spool **50.** HP spool **46,** IP spool **48,** and LP spool **50** are substantially co-axial. That is, LP spool **50** may extend through a longitudinal channel provided through IP spool **48,** and IP spool **48** may extend through a longitudinal channel provided through HP spool **46.**

During operation of jet engine **20,** air is drawn into intake section **22** and accelerated by fan **32.** A portion of this accelerated air is directed through a bypass section **52** disposed between fan case **34** and an engine cowl **54** to provide forward thrust. The remaining portion of air exhausted from fan **32** is directed into compressor section **24** and compressed by IP compressor **36** and HP compressor **38.** The compressed air then flows into combustion section **26** wherein the air is mixed with fuel and combusted. The combusted air expands rapidly and flows through turbine section **28** thereby rotating turbines **40, 42,** and **44.** The rotation of turbines **40, 42,** and **44** (and, therefore, of spools **46, 48,** and **50)** drives the rotation of HP compressor **38,** IP compressor **36,** and fan **32,** respectively. Finally, after passing through turbine section **28,** the air is exhausted through a propulsion nozzle **56** mounted in exhaust section **30** to provide addition forward thrust.

Jet engine **20** is further provided with an engine output shaft, which may be any body that is rotatably coupled to HP spool **46.** As a non-limiting example, the engine output shaft may be a gearbox output shaft contained within a conventional accessory gearbox. To further illustrate this point, FIGs. 1 and 2 depict jet engine **20** as having an accessory gearbox **60** mounted to the lower structure of jet engine **20.** Accessory gearbox **60** includes a gearbox housing **62,** which contains a gearbox input shaft **64** and at least one gearbox output shaft **66** (e.g., a female spline). Gearbox output shaft **66** is rotationally coupled to gearbox input shaft **64,** which is rotationally coupled to HP spool **46** by way of a tower shaft **70.** When HP spool **46** rotates, tower shaft **70** drives gearbox input shaft **64,** which, in turn, drives gearbox output shaft **66.** Gearbox output shaft **66** thus rotates in conjunction with HP spool **46.** However, the rotational frequency of gearbox output shaft **66** will not be equivalent to that of HP spool **46;** instead, relative to the rotational frequency of HP spool **46,** the rotational frequency of gearbox output shaft **66** will be reduced by the gear ratio from HP spool **46** to gearbox output shaft **66.** For example, if the gear ratio is 3.5:1, HP spool **46** will rotate three and a half revolutions for each revolution of gearbox output shaft **66.**

At least one accessory flange or pad **72** is provided on the exterior of gearbox housing **62.** As indicated in FIG. 2, an accessory **76** (e.g., a generator, a hydraulic pump, etc.) may be mounted (e.g., bolted to) on pad **72** after engine **20** has been installed on an aircraft. Accessory **76** includes a rotatable shaft **78** (e.g., a male spline), which may be inserted into gearbox housing **62** through an aperture **74** provided in gearbox housing **62.** When inserted through aperture **74,** rotatable shaft **78** mechanically engages gearbox output shaft **66.** Thus, when jet engine **20** is activated, HP spool **46** drives gearbox output shaft **66,** which, in turn, drives rotatable shaft **78** of accessory **76.**

HP turbine **40** and HP compressor **38** each include one or more bladed discs, which are fixedly mounted on HP spool **46** and rotate therewith. If these bladed discs are not properly balanced, vibrations may be produced as HP spool **46** rotates. To minimize or eliminate these vibrations, the bladed discs forming HP turbine **40** and those forming compressor **38** may be trim balanced by adding or removing weight from HP turbine **40,** HP compressor **38,** and/or HP spool **46.** As explained above, the vibrations produced by engine **20** may be measured during a number of trial runs and then compared to the rotational frequency of HP spool **46** during each trial run to determine the locations at which weight should be added or removed. Although electronic devices exist that produce a synchronous timing pulse indicative of the rotational frequency of an HP spool during a given trial run, the timing pulse becomes asynchronous between successive trial runs. The following describes one example of signal generator that produces a signal indicative of the rotational frequency and position of HP spool **46** that remains synchronized with HP spool **46** over an infinite number of trial runs and thereby facilitates the trim balancing process.

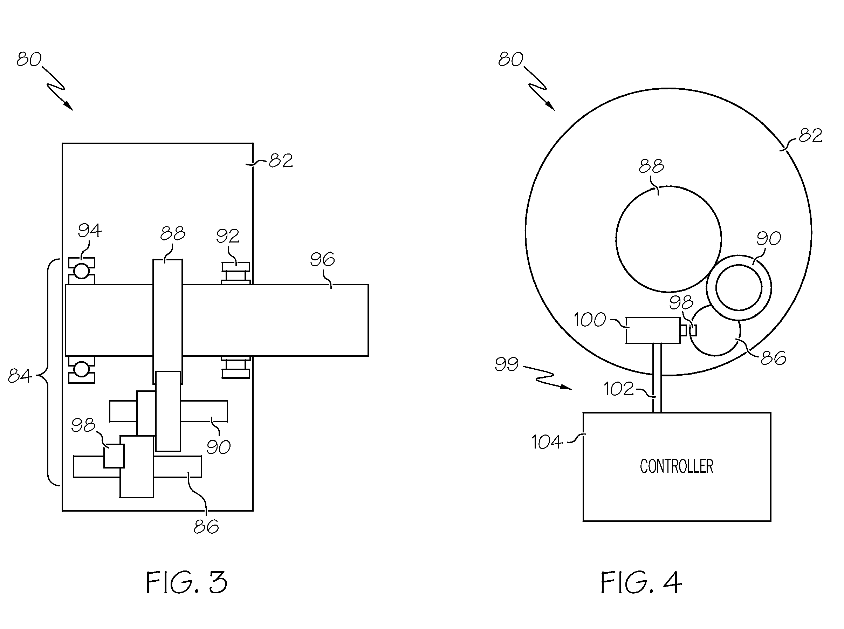

FIGs. 3 and 4 are simplified side cross-sectional and rear cross-sectional views, respectively, of a synchronous signal generator **80** in accordance with a first exemplary embodiment. Signal generator **80** includes a housing **82,** which houses conversion gearing **84** (e.g., a gear train) and a generator output member **86** (e.g., a geared shaft). Generator output member **86** is mechanically coupled to, and thus rotates in conjunction with, conversion gearing **84.** Conversion gearing **84** includes one or more rotational bodies suitable for indirectly coupling generator output member **86** to HP spool **46;** e.g., conversion gearing **84** may be a gear train, which is configured to be mechanically coupled to gearbox output shaft **66** in the manner described below. In the illustrated exemplary embodiment, conversion gearing **84** includes first and second geared shafts **88** and **90.** Geared shafts **88** and **90** are each rotatably mounted in housing **82.** For example, in the case of geared shaft **88,** a first bearing assembly **92** (e.g., an annular roller bearing) may be disposed around an intermediate portion of geared shaft **88** and a second bearing assembly **94** (e.g., an annular ball bearing) may be disposed around an end portion of geared shaft **88.** Similar bearing assemblies may also be disposed around geared shaft **90** and/or generator output member **86,** although such bearing assemblies are not shown in FIGs. 3 and 4 for clarity.

Conversion gearing **84** is configured to be mechanically coupled to HP spool **46** via accessory gearbox **60** (FIG. 2). For example, geared shaft **88** may include a threaded or toothed protruding portion **96** (e.g., a male or female spline) that may extend from housing **82.** Synchronous signal generator **80** may be mounted (e.g., bolted) onto accessory pad **72** (FIGs. 1 and 2) prior to installation of (or after the removal of) accessory **76** (FIG. 2). When synchronous signal generator **80** is mounted to accessory pad **72,** protruding portion **96** extends through aperture **74** (FIG. 1) and mechanically engages gearbox output shaft **66** (e.g., a female or male spline). Thus, when synchronous signal generator **80** is installed in this manner, generator output member **86** is coupled and rotates in conjunction with conversion gearing **84** and, therefore, HP spool **46.**

Synchronous signal generator **80** is configured such that the rotational frequency of generator output member **86** is substantially equivalent to that of HP spool **46.** This point is further illustrated in FIG. 5, which is a functional schematic of signal generator **80** coupled to gearbox output shaft **66** of multi-spool engine **20.** As stated above, the rotational frequency of gearbox output shaft **66** (RF_{gearbox_output_shaft}) is related to the rotational frequency of HP spool **46.** In particular, RF_{gearbox_output_shaft} is a function of the gear ratio taken from HP spool **46** to gearbox output shaft **66.** This gear ratio is determined by the design of jet engine **20** and may vary from engine to engine. Thus, for purposes of illustration, the HP-spool-to-gearbox-output-shaft gear ratio will be referred to generically as X:Y. Conversion gearing **84** is configured such that the gear ratio taken from gearbox output shaft **66** to generator output member **86** is substantially the inverse of the gear ratio taken from HP spool **46** to gearbox output shaft **66.** That is, conversion gearing **84** is configured to produce a gearbox-ouput-shaft-to-generator-ouput-member gear ratio of substantially Y:X. Thus, if the HP-spool-to-gearbox-output gear is, for example, 3.2:1, conversion gearing **84** will preferably be configured to produce a gearbox-output-shaft-to-generator-output-member gear ratio of substantially 1:3.2. In this manner, conversion gearing **84** may be configured such that generator output member **86** rotates at substantially the same frequency as does HP spool **46** (i.e., the gear ratio taken from HP spool **46** to generator output member **86** is substantially X:X or 1:1).

A once-per-revolution timing mark **98** is provided on generator output member **86.** Once-per-revolution timing mark **98** may be any element that may be monitored to produce a timing signal indicating the rotational frequency of output member **86** and, therefore, of HP spool **46.** In one option, once-per-revolution timing mark **98** may be a topographical feature formed on the shaft of generator output member **86,** such as a cavity (e.g., a notch) or a projection (e.g., a keyway). In another option, once-per-revolution timing mark **98** may be an optical feature, such as a surface (e.g., reflective tape) having unique light-absorbing or reflecting characteristics relative to the surrounding portions of output member **86.** As shown in FIG. 4, the rotation of once-per-revolution timing mark **98** may be monitored electronically by a sensor system **99** disposed proximate generator output member **86.** In the illustrated exemplary embodiment, sensor system **99** includes a probe or sensor **100,** which may be coupled by way of connector **102** to a sensor controller **104.** Sensor **100** may take the form of any electronic device capable of monitoring the movement of timing mark **98** (e.g., identifying when timing mark **98** passes by sensor **100).** Thus, if timing mark **98** is a topographical feature formed in or on a metal body, and sensor **100** may be an induction probe (e.g., monopole or a proximity probe). Alternatively, if timing mark **98** is a strip of reflective tape, and sensor **100** may be a light source (e.g., a laser, a light emitting diode, etc.) and a light sensor. Regardless of their particular form, once-per-revolution timing mark **98** and sensor **100** cooperate to produce a timing pulse corresponding to each revolution of generator output member **86** and, therefore, to each revolution of HP spool **46.** As will be appreciated by one of ordinary skill in the art, the timing pulses produced by sensor **100** may be utilized by controller **104** or other conventional vibration measuring equipment to determine the location at which weight should be added or removed from HP turbine **40,** HP compressor **38,** and/or HP spool **46.**

It should be appreciated from the foregoing that conversion gearing **84** substantially matches the rotational frequency of generator output member **66** to that of HP spool **46.** It should also be appreciated that generator output member **66** is mechanically locked to HP spool **46** (e.g., even if HP spool **46** were to be manually moved by a technician inspecting HP turbine **40,** generator output shaft **66** will move accordingly). For these reasons, generator output member **66,** and thus the timing pulses produced by sensor **100,** will remain synchronized with HP spool **46** for an infinite number of trial runs. As a result, jet engine **20** may be trim balanced utilizing a minimum number of trial runs (e.g., one plane trim balancing may be performed with a single trial run, and two plane trim balancing may be performed with a total of two trial runs). Synchronous signal generator **80** thus facilitates the trim-balancing of high speed (or intermediate speed) shafts that do not have a synchronous timing mark available.

Although the foregoing has described an exemplary synchronous signal generator that may be retrofitted onto a multi-spool jet engine, it should be understood that the signal generator may be incorporated into the engine. Furthermore, to provide compatibility with engines having variety of spool-to-gearbox-output-shaft gear ratios, the synchronous signal generator may be configured to permit the gear ratio of the conversion gearing to be manipulated (e.g., the conversion gearing may be interchangeable). Note also that the synchronous signal generator may be utilized to trim balance any suitable spool, including, for example, an intermediate pressure spool (e.g., IP spool **50** shown in FIG. 1). While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A synchronous signal generator (80) for use in conjunction with an aircraft engine (20) having a spool (46) and an engine output shaft (66) driven by the spool, the synchronous signal generator comprising:
a generator housing (82);
a generator output member (86) rotatably mounted in the generator housing;
a once-per-revolution timing mark (98) on the generator output member; and
conversion gearing (84) disposed within the generator housing and configured to couple the engine output shaft to the generator output member, the conversion gearing rotating the generator output member at substantially the same rotational frequency as the spool when the conversion gearing is coupled to the engine output shaft.

2. A synchronous signal generator (80) according to Claim 1 wherein the aircraft engine (20) includes an accessory gearbox (60) containing at least a portion of the engine output shaft (66), the generator housing (82) configured to be mounted onto the accessory gearbox.

3. A synchronous signal generator (80) according to Claim 2 wherein the conversion gearing (84) includes a protruding portion (96) extending from the generator housing (82), the protruding portion configured to coupled to the engine output shaft (66).

4. A synchronous signal generator (80) according to Claim 3 wherein the protruding portion (96) comprises a first spline, and the engine output shaft (66) comprises a second spline configured to engage the first spline.

5. A synchronous signal generator (80) according to Claim 1 wherein the synchronous signal generator (80) further comprises a sensor system (99) disposed proximate the generator output member (86) and configured to monitor the rotation thereof via the once-per-revolution timing mark (98).

6. A synchronous signal generator (80) according to Claim 5 wherein the sensor system (99) comprises:
a sensor (100) positioned proximate the generator output member (86) and configured to monitor the rotation thereof via the once-per-revolution timing mark (98); and
a controller (104) operatively coupled to the sensor.

7. A synchronous signal generator (80) according to Claim 6 wherein the sensor (100) is a probe selected from a group consisting of a proximity probe, a monopole, and a light probe.

8. A synchronous signal generator (80) according to Claim 1 wherein the once-per-revolution timing mark (98) comprises a topographical feature formed on the generator output member (86).

9. A synchronous signal generator (80) according to Claim 8 wherein the once-per-revolution-timing mark (98) is a keyway.

10. A synchronous signal generator (80) according to Claim 1 wherein the once-per-revolution timing mark (98) comprises an optical feature.
